(19) Europäisches Patentamt
European Patent Office
Office européen des brevets

(11) Veröffentlichungsnummer: **0 080 226**
**B1**

# (12) EUROPÄISCHE PATENTSCHRIFT

(45) Veröffentlichungstag der Patentschrift: **19.06.85**

(51) Int. Cl.⁴: **A 01 N 59/20**, C 01 G 3/02

(21) Anmeldenummer: **82201430.4**

(22) Anmeldetag: **12.11.82**

(54) **Fungizides Mittel.**

(30) Priorität: **20.11.81 DE 3145997**

(43) Veröffentlichungstag der Anmeldung: **01.06.83 Patentblatt 83/22**

(45) Bekanntmachung des Hinweises auf die Patenterteilung: **19.06.85 Patentblatt 85/25**

(84) Benannte Vertragsstaaten: **AT BE CH DE FR GB IT LI LU**

(56) Entgegenhaltungen:
**DE-A-1 592 256**
**FR-A-1 501 119**
**US-A-2 924 505**
**US-A-3 628 920**

(73) Patentinhaber: **NORDDEUTSCHE AFFINERIE, Alsterterrasse 2, D-2000 Hamburg 36 (DE)**

(72) Erfinder: **Ploss, Hartmut, Dr., Sierichstrasse 88, D-2000 Hamburg 60 (DE)**
Erfinder: **Goebel, Gerhard, Ochsenmarktskamp 24, D-2210 Itzehoe (DE)**

(74) Vertreter: **Fischer, Ernst, Dr., Reuterweg 14, D-6000 Frankfurt am Main 1 (DE)**

EP 0 080 226 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein fungizides Mittel mit einem Gehalt an Kupfer-II-hydroxid als Wirkstoff.

Kupferverbindungen werden als Mittel gegen Pilzerkrankungen an Nutzpflanzen seit langer Zeit eingesetzt und gewinnen aufgrund ihrer günstigen Rückstandssituation eine zunehmende Bedeutung.

Seit Entwicklung der sogenannten »Bordeaux-Brühe« — eine Mischung aus Kupfersulfat und Kalkmilch — und der damit erworbenen Erkenntnis wurde eine Anzahl von verwandten Kupferfungiziden hergestellt, indem eine wäßrige Lösung eines Kupfersalzes mit Alkali unter Bildung einer Suspension von Niederschlägen vermischt wurde. So wurden weiterhin eine sogenannte »Burgunder-Brühe« — eine Mischung aus Kupfersulfat und Natriumcarbonat — sowie ein aus Kupferchlorid und Alkalilauge erzeugtes Kupferoxychlorid als fungizides Mittel entwickelt. Dabei zeigte sich, daß insbesondere das Kupfer-II-hydroxid eine ausgezeichnete fungizide Wirkung bei gleichzeitiger guter Pflanzenverträglichkeit besitzt und daß eine Erhöhung des Kupfer-II-hydroxid-Anteils eine biologische Verbesserung erbringt.

Daher wurde versucht, den Kupfer-II-hydroxid-Anteil im Kupferoxychlorid zu erhöhen, indem man z. B. das basische Kupfersalz in wäßriger, salzfreier Aufschlämmung mit Kalziumhydroxid oder Kalziumchlorid und Alkalihydroxid im stöchiometrischen Verhältnis zu einem Kupferkalziumsalz entsprechend

$$Cu(OH)_2 \cdot CaCl_2 \cdot nH_2O$$

umsetzt.

Auch ging man dazu über, Kupfer-II-hydroxid selbst als fungizides Mittel einzusetzen.

Die zur Herstellung des Kupfer-II-hydroxides bekannten Verfahren sind jedoch mit gewissen Nachteilen behaftet. So führt die Behandlung von Kupferschrott in 3%iger Ammoniaklösung durch Einblasen von Luft (US-PS 2 536 096) oder die Behandlung von Kupfer-II-nitratlösungen mit konzentrierter Sodalösung bei 80° C (DE-PS 824 200) zu Produkten, die nicht die erforderliche Stabilität aufweisen und sich insbesondere zu Kupferoxid umsetzen.

Andere Verfahren, bei denen zunächst äquimolare Mengen Kupfersulfat und Trinatriumphosphat zu Kupfernatriumphosphat (entsprechend $CuNaPO_4$) und dann unter Zugabe einer hinreichenden Menge Natriumhydroxid das Kupfernatriumphosphat in Kupferhydroxid umgewandelt werden (z. B. US-PS 2 266 688) und RE 24 324) (sogenanntes »Phosphatverfahren«), haben den Nachteil, daß die vielen veränderlichen Faktoren, wie Temperatur, Mengenverhältnisse und Konzentration, pH-Wert, ein Kupferhydroxid entstehen lassen, das in seiner Zusammensetzung und Eigenschaft stark variiert. Ein weiterer Nachteil dieser Verfahren ist der starke Anfall von Natriumsulfat, nämlich von 1 Mol Natriumsulfat pro Mol Kupferhydroxid.

Zwecks Vermeidung zumindest einiger dieser Nachteile sieht die DE-AS 1 542 931 vor, nach dem »Phosphatverfahren« erzeugtes Kupfer-II-hydroxid, das als biozide Dispersion verwendet werden soll, auf einen pH-Wert von 7,0 bis 9,5 und eine Konzentration von mindestens 0,1 Gew.-% einzustellen und wäßriges Dispersionsmittel zuzusetzen. Hierdurch wird eine genügend stabile Kupfer-II-hydroxid-Dispersion für fungizide Anwendungszwecke erhalten. Die gewisse Verbesserung der fungiziden Wirkung wird hierbei durch eine vergrößerte Regenbeständigkeit erreicht, eine bessere Wirkung des Kupfer-II-hydroxids selbst ist damit aber nicht verbunden. Darüber hinaus bleibt der Nachteil eines starken Natriumsulfatanfalles erhalten.

Auf elektrolytischem Wege arbeitende Verfahren, bei denen man die Lösung eines aus der Kupferanode gebildeten Kupfersalzes im Kathodenraum mit dort vorhandenen oder gebildeten Hydroxylionen zusammenbringt (DE-OS 1 592 441), sind infolge der erforderlichen Elektrolyseeinrichtungen vergleichsweise aufwendig.

Eine weitere Verfahrensart besteht darin, Kupfer-II-hydroxid aus Kupferoxychlorid (entsprechend

$$3 \cdot Cu(OH)_2 \cdot CuCl_2 \cdot XH_2O),$$

in dem das Kupfer-II-hydroxid bereits partiell vorgebildet ist, herzustellen. Dies geschieht durch Umsetzung mit basischen Substanzen, wie gebranntem Kalk, unter erhöhten Temperaturen (DE-PS 306 035), gegebenenfalls auch erhöhtem Druck (DE-PS 272 182), auch gefolgt von einer weiteren Wiederauflösung des Kupfer-II-hydroxids mit Ammoniakwasser und erneuter Fällung (DE-PS 461 556). Auch die so erhaltenen Endprodukte sind nicht von befriedigender Stabilität.

Auch ergab sich, daß die fungizide Wirksamkeit der nach den bekannten Verfahren hergestellten Kupfer-II-hydroxide nicht ausreichend groß ist.

Aufgabe der Erfindung ist es, ein fungizides Mittel mit einem Gehalt an Kupfer-II-hydroxid bereitzustellen, das die Nachteile der bekannten Mittel nicht aufweist, insbesondere eine höhere fungizide Wirksamkeit aufweist, und dessen Kupfer-II-hydroxid-Komponente in einfacher Weise und wenig aufwendig herstellbar ist.

Die Aufgabe wird gelöst, indem man ein fungizides Mittel der eingangs genannten Art einsetzt, dessen Kupfer-II-hydroxid-Komponente man durch Umsetzung von in einer mit Phosphationen versetzten wäßrigen Phase suspendiertem Kupferoxychlorid mit Alkali- und/oder Erdalkalihydroxid, anschließende Wäsche der Kupfer-II-hydroxid-Ausfällung und erneute Suspendierung mit nachfolgender pH-Werteinstellung auf Werte zwischen 7,5 und 9 mittels saurer Phosphationen erhalten hat.

Die hohe fungizide Wirksamkeit dürfte in der Art der Herstellung aus Kupferoxychlorid und der Stabilisierung des erzeugten Kupfer-II-hydroxids begründet sein, die insbesondere den sonst zu beobachtenden Alterungsprozeß, selbst bei kurzen Reaktionszeiten (bei der Herstellung) und kurzen Lagerzeiten, wie bei der »Bordeaux-Brühe«, vermeidet.

Es ist insbesondere überraschend, daß das nach dem speziellen Verfahren hergestellte Kupfer-II-hydroxid in seinen Formulierungen keine Blattschäden oder andere phytotoxische Schäden hervorruft und außer der erwähnten fungiziden Potenz eine längere Dauerwirkung aufweist.

Es ist besonders überraschend, daß mit dem erfindungsgemäßen fungiziden Mittel Phytophthora cinnamomi an Chamaecyparis und mit Phytophthora infestans befallene Kartoffeln gut, also mit 1—3 Spritzungen, bekämpft werden kann. Insbesondere eignet es sich auch für die Bekämpfung von Phytophthora palmivora im Kakao.

Weiterhin wirkt das erfindungsgemäße fungizide Mittel gegen folgende, in landwirtschaftlichen und gärtnerischen Kulturen auftretende pilzliche Erkrankungen:

Alternaria-Arten
Cercospora-Arten
Cylindrocladium scoparium
Fusarium oxysporium
Gaeumannomyces graminis
Monilia-Arten
Nectria galligena
Peronospora-Arten
Phytophthora-Arten
Puccinia-Arten an Gemüse
Venturia inaequalis u. a. Venturia-Arten

Das fungizide Mittel gemäß Erfindung kann in seiner bevorzugten Ausgestaltung die üblichen Zusätze von Streck-, Lösungs-, Emulgier-, Netz- und ähnlichen Hilfsmitteln aufweisen. Damit können sie zu Suspensionen, emulgierbaren Pulvern und Granulaten aufgearbeitet werden.

Die Anwendung des Mittels geschieht in üblicher Weise, z. B. durch Bespritzen, Zerstäuben, Besprühen, Vernebeln, Gießen oder Tauchbehandlung.

Die fungiziden Mittel können außer zur Bekämpfung von pilzlichen Erkrankungen auf Blättern und anderen oberirdischen Pflanzenteilen auch zur Saatgutbeizung, Desinfektion und zur Verhinderung von Pilzbewuchs an Pflanzenteilen während der Lagerung, speziell der Kühlhauslagerung, verwendet werden.

In weiterer vorteilhafter Ausgestaltung der Erfindung kann das erfindungsgemäße Fungizid einen zusätzlichen Gehalt an weiteren Pflanzenschutzmitteln aufweisen.

Zweckmäßigerweise enthalten die fungiziden Mittel zwischen 0,1 und 95 Gew.-%, vorzugsweise zwischen 5 und 60 Gew.-%, Wirkstoff (bezogen auf Kupfer-II-hydroxid).

Bei der Verwendung zur Behandlung der oberirdischen Pflanzenteile kann die Wirkstoffkonzentration in einem größeren Konzentrationsbereich schwanken.

Im allgemeinen arbeitet man mit Konzentrationen zwischen 0,01 und 1 Gew.-%. Dieser Bereich kann jedoch in besonderen Fällen nach oben oder unten überschritten werden.

Bei der Herstellung des im erfindungsgemäßen Mittel eingesetzten Kupfer-II-hydroxids wird dieses durch Umsetzung von in einer mit Phosphationen versetzten wäßrigen Phase supendiertem Kupferoxychlorid mit Alkali- und/oder Erdalkalihydroxid, anschließende Wäsche der Kupfer-II-hydroxid-Ausfällung und erneute Suspendierung mit nachfolgender pH-Werteinstellung auf Werte zwischen 7,5 und 9 mittels saurer Phosphationen erhalten. Es empfiehlt sich eine vergleichsweise hohe Suspensionsdichte, da dadurch die Möglichkeit gegeben ist, die vom gebildeten Kupfer-II-hydroxid abgetrennte Prozeßlösung zusammen mit dem in nachfolgenden Schritten anfallenden Waschwasser ganz oder teilweise in einem neuen Ansatz unterzubringen. Grenzen sind durch eine zu hohe Konsistenz der Suspension und damit unzureichende Vermischung gesetzt.

Im allgemeinen sollte der Kupferoxychlorid-Gehalt in der Suspension auf max. 25 Gew.-%, vorzugsweise 10 bis 15 Gew.-%, eingestellt werden.

Die Umsetzung des Kupferoxychlorids sollte bei max. 35° C, vorzugsweise bei einer Temperatur im Bereich von 20 bis 25° C erfolgen, weil dadurch insbesondere vermieden wird, daß Anteile des Kupfer-II-hydroxids in Oxid übergehen. Natronlauge ist besonders geeignet. Um eine quantitative Umsetzung zu gewährleisten, ist ein stöchiometrischer Überschuß erforderlich. Eine darüber hinausgehende zusätzliche Erhöhung des Überschusses beschleunigt zudem den Prozeß. Beispielsweise ist bei Zugabe der 4fachen für die Umsetzung erforderlichen Menge Natronlauge die Reaktion in max. 20 Minuten abgeschlossen.

Eine besonders geeignete Quelle für Kupferoxychlorid kann frisch hergestellte und gewaschene

Kupferoxychlorid-Suspension sein.

Im Unterschied zu den bekannten »Phosphatverfahren« erfolgt beim beschriebenen Verfahren zur Herstellung von Kupfer-II-hydroxid trotz Zugabe von Phosphationen keine chemische Umsetzung etwa zu Kupfernatriumphosphat, sondern die zugefügten Phosphationen haben lediglich eine stabilisierende Wirkung. Infolgedessen genügt es, wenn man die Umsetzung des suspendierten Kupferoxychlorids in Gegenwart von mindestens 0,5 g/l, vorzugsweise von 1 bis 4 g/l, Phosphationen durchführt bzw. wenn man das erhaltene Kupfer-II-hydroxid mit mindestens 1 g/l, vorzugsweise 3 bis 6 g/l, Phosphationen stabilisiert.

Zur Einstellung des pH-Wertes von 7,5 bis 9 mittels Zugabe sauren Phosphates wird man üblicherweise Phosphorsäure verwenden. Es ist jedoch auch primäres Phosphat, z. B. primäres Natriumphosphat, geeignet (EP-A1-0 080 227).

Das so erhaltene Kupfer-II-hydroxid enthält 55 bis 62 Gew.-% Kupfer, besitzt eine Teilchengröße von 0,1 bis 5 µm und verändert sich in seiner physikalischen und chemischen Zusammensetzung selbst innerhalb mehrerer Jahre nicht. Es kann in Form einer Suspension, filterfeucht, aber auch als getrocknetes Pulver der Weiterverarbeitung zugeführt werden.

Die Erfindung wird anhand der nachfolgenden Beispiele im Vergleich mit bekannten fungiziden Mitteln auf Basis Kupfer-II-hydroxid beispielsweise und näher erläutert.

Zu den Versuchen wurden benutzt:

a) ein »erfindungsgemäßes Mittel«, das

175 g Kupfer-II-hydroxid
3 g Polysaccharid
34 g anionenaktives Tensid
34 g nichtionogenes Tensid
Rest Wasser (auf 1 l)

enthielt;

b) ein »Vergleichsmittel«, das die gleiche Zusammensetzung aufwies, wie das unter a) genannte Mittel, jedoch als Kupfer-II-hydroxid, ein handelsübliches, nach dem »Phosphatverfahren« erzeugtes Produkt, enthielt.

Anwendungs- und Auswertungsbedingungen sowie die Bewertung sind nachfolgend tabellarisch zusammengestellt.

Die Konzentrationsangaben für das Behandlungsmittel beziehen sich auf das unter a) spezifizierte »erfindungsgemäße Mittel«, das heißt, die Behandlungsmittel sind durch Verdünnen des »erfindungsgemäßen Mittels« im Verhältnis 1 : 2000 (Beispiel 1) bzw. 1 : 200 (Beispiel 2 und 4) erhalten worden. Die Mengenangaben im Beispiel 3 beziehen sich auf das »erfindungsgemäße Mittel« und das »Vergleichsmittel« selbst. In den Vergleichsversuchen wurden die gleichen Anwendungs- und Auswertungsbedingungen herangezogen.

Beispiel 1

Wirkungsvergleich bei Apfelschorf (Venturia inaequalis)

Anwendung: Spritzverfahren 0,05%ig, 12 × im Abstand von 7—10 Tagen
Auswertung: nach der letzten Behandlung (August)

| | Phytotoxizität der Früchte (Fruchtberostung) in % | der Blätter 1—9 | Blattschorfbefall in % | Fruchtschorfbefall 1—3 |
|---|---|---|---|---|
| Erfindungsgemäßes Mittel | 7,5 | 2 | 1,2 | 1,13 |
| Vergl. Mittel | 25 | 5 | 2,5 | 1,15 |
| Kontrolle (unbehandelt) | 18,0 | 2 | 30,0 | 2,15 |

Beispiel 2

Wirkungsvergleich bei Wurzelhalsfäule
Phytophthora cinnamomi) an Scheinzypresse (Chamaecyparis)

Anwendung: Gießverfahren 0,5%ig, 3 × im Abstand von 4 Wochen

| | Anzahl gesunder Pflanzen in % 3 Monate nach der letzten Anwendung |
|---|---|
| Erfindungsgemäßes Mittel | 95 |
| Vergl. Mittel | 62 |
| Kontrolle (unbehandelt) | 5 |

Beispiel 3

Wirkungsvergleich bei Krautfäule (Phytophthora infestans)
an Kartoffeln bei bereits eingetretenem Befall

Anwendung: Spritzverfahren 2,0 l/ha, 3 × im Abstand von 10 Tagen

| | Befall in % in x Wochen nach der letzten Behandlung | | |
|---|---|---|---|
| | x = 2 | = 4 | = 6 |
| Erfindungsgemäßes Mittel | 5 | 10 | 22 |
| Vergl. Mittel | 15 | 25 | 35 |
| Kontrolle (unbehandelt) | 80 | 90 | 95 |

Beispiel 4

Wirkungsvergleich bei Wurzelhalsfäule (Cylindrocladium scoparium an Azaleen)

Anwendung: Gießverfahren 0,5%ig, 3 × im Abstand von 2 Monaten

| | Schädigung der Pflanzen (Wuchsdepressionen) in % zur Kontrolle | Anzahl gesunder Pflanzen in % 3 Monate nach d. letzten Anwendung |
|---|---|---|
| Erfindungsgemäßes Mittel | 0 | 94 |
| Vergl. Mittel | 30 | 83 |
| Kontrolle (unbehandelt) | 0 | 60 |

**Patentansprüche**

1. Fungizides Mittel mit einem Gehalt an Kupfer-II-hydroxid als Wirkstoff, dadurch gekennzeichnet, daß man das Kupfer-II-hydroxid durch Umsetzung von in einer mit Phosphationen versetzten wäßrigen Phase suspendiertem Kupferoxychlorid mit Alkali- und/oder Erdalkalihydroxid, anschließende Wäsche der Kupfer-II-hydroxid-Ausfällung und erneute Suspendierung mit nachfolgender pH-Werteinstellung auf Werte zwischen 7,5 und 9 mittels saurer Phosphationen erhalten hat.

2. Fungizides Mittel nach Anspruch 1, dadurch gekennzeichnet, daß es einen zusätzlichen Gehalt an Streck-, Lösungs-, Emulgier-, Netz- und ähnlichen Hilfsmitteln aufweist.

3. Fungizides Mittel nach Anspruch 1 oder 2, dadurch gekennzeichnet, daß es einen zusätzlichen Gehalt an weiteren Pflanzenschutzmitteln aufweist.

4. Fungizides Mittel nach Anspruch 1, 2 oder 3, dadurch gekennzeichnet, daß es das Kupfer-II-hydroxid in Mengen von 0,1 bis 95 Gew.-%, vorzugsweise 5 bis 60 Gew.-%, enthält.

## Claims

1. Fungicidal agent with a content of cupric hydroxide as an effective substance, characterized in that the cupric hydroxide has been obtained by reaction of copper oxychloride, suspended in an aqueous phase containing phosphate ions, with alkali metal hydroxide and/or alkaline earth metal hydroxide, washing of the precipitated cupric hydroxide, again suspending and then adjusting a pH value of 7,5 to 9 by an addition of acid phosphate ions.

2. Fungicidal agent according to claim 1, characterized in that it has an additional content of extending agents, solvents, emulsifying and wetting agents and similar adjuvants.

3. Fungicidal agent according to claim 1 or 2, characterized in that it has an additional content of further plant protectives.

4. Fungicidal agent according to claim 1, 2 or 3, characterized in that the cupric hydroxide is contained in an amount of 0,1 to 95% by weight, preferably 5 to 60% by weight.

## Revendications

1. Agent fongicide ayant une teneur en hydroxyde de cuivre II à titre de substance active, caractérisé en ce que l'on a obtenu l'hydroxyde de cuivre II par réaktion, sur un hydroxyde de métal alcalin et/ou de métal alcalino-terreux, d'oxychlorure de cuivre en suspension dans une phase aqueuse mélangée à des ions phosphate, par lavage ensuite du précipité d'hydroxyde de cuivre II et par remise en suspension avec réglage ultérieur du pH à des valeurs comprises entre 7 et 9 au moyen d'ions phosphate acides.

2. Agent fongicide suivant la revendication 1, caractérisé en ce qu'il comprend une teneur supplémentaire en diluant, en solvant, en émulsionnant, en agent mouillant et en autres adjuvants similaires.

3. Agent fongicide suivant la revendication 1 ou 2, caractérisé en ce qu'il comprend une teneur supplémentaire en d'autres pesticides.

4. Agent fongicide suivant la revendication 1, 2 ou 3, caractérisé en ce qu'il contient de l'hydroxyde de cuivre II, en des quantités de 0,1 à 95% en poids et, de préférence, de 5 à 60% en poids.